# EUROPEAN PATENT SPECIFICATION

(11) **EP 1 581 942 B1**
(45) Date of publication and mention of the grant of the patent: **06.09.2006**
(21) Application number: 03778661.3
(22) Date of filing: 18.12.2003
(51) Int. Cl.: G11B 7/24, G11B 17/028, G11B 7/26

(54) **MAGNETICALLY CLAMPED OPTICAL DISC AND APPARATUS**
MAGNETISCH GEKLEMMTER OPTISCHER DATENTRÄGER UND VORRICHTUNG
DISQUE OPTIQUE ET APPAREIL POUR APPLICATIONS PORTATIVES

(30) Priority: 30.12.2002 EP 02293261
(43) Date of publication of application: 05.10.2005
(73) Proprietor: Koninklijke Philips Electronics N.V., 5621 BA Eindhoven (NL)
(72) Inventor: VAN DER AA, Michiel, 75008 Paris (FR); BORG, Hermanus, 75008 Paris (FR)
(74) Representative: Landousy, Christian
(86) International application number: PCT/IB2003/006158
(87) International publication number: WO 2004/059632

(56) References cited:
- EP-A- 0 325 399
- EP-A- 1 067 519

## Description

### Field of the invention

The invention relates to an optical disc and to an optical recording and/or reproducing apparatus for recording and/or reproducing said optical disc.

The invention is especially useful for portable applications where optical discs of reduced dimensions such as Small Form Factor Optical (SFFO) discs are required.

### Domain of the invention

A number of disc-shaped optical storage media have been developed for storing various types of digital data in a manner such that the optical disc can be readily removed from the read/write drive for which it is designed. Common current examples include the Compact Disc (CD) and the Digital Versatile Disc (DVD). Although these examples have been highly successful for particular applications such as storing data for use on a Personal Computer (PC), or storing music or other audio or video information such as motion pictures, these devices have proved less useful in applications where an optical storage medium of smaller size is preferable. One class of such applications includes various Personal Electronic Devices (PEDs). Personal electronic devices in general have a size, shape and weight such that it is feasible and convenient to carry such devices on a person. Examples of personal electronic devices include digital cameras, cellular telephones, personal digital assistants and the like.

An optical disc having a more compact design and a larger storage capacity is described in the European patent application EP 1 067 519 A1. As shown in Fig. 1, said optical disc consists of a substrate 1 made of polycarbonate resin, which has a thickness Th₁ of 0.6 mm. The substrate comprises a center hole 2. Around said center hole, said substrate comprises an annular table abutment 3 having a thickness Th₂ equal to Th₁. The table abutment 3 is to be placed on a turntable 4 of a rotary driving mechanism in an optical recording and/or reproducing apparatus in which the optical disc is placed. A magnetic clamping hub 5 is provided at the center of the substrate 1 so as to close the center hole 2. The hub 5 is made of a thin plate of magnetic metal such as iron.

Said optical disc is laid on a rotary driving mechanism of an optical recording and/or reproducing apparatus. The rotation driving mechanism consists of a spindle motor 8, a spindle 7 driven by said spindle motor, and the turntable 4 fixed at an end of said spindle. An annular magnet 6 is fixed on the turntable 4. The hub 5 of the optical disc is attracted by the magnet 6 and is thus securely held on the turntable 4 and can be rotated along with the turntable 4. It is to be noted that the shapes of the hub 5, the turntable 4, and the table abutment 3 have been designed such that, when the optical disc is placed on the turntable, the hub is in the vicinity of, but not in contact with the annular magnet 6. This prevents any excessive attractive force from acting on the hub, and consequently the optical disc can be easily removed from the turntable.

A drawback of such an optical disc is that it requires a hub for being clamped to the turntable of an optical recording and/or reproducing apparatus. Said hub has to be fixed to the optical disc, which raises some difficulties in the production process of the optical disc and causes the thickness of said optical disc to be too great for portable applications.

### Summary of the invention

An object of the invention is to propose an optical disc which is easier to implement, in particular for portable applications.

To this end, an optical disc according to the invention comprises a magnetic substrate.

With the invention, no hub is required because the substrate, by virtue of its magnetic properties, is able to clamp the optical disc onto a turntable of a rotary driving mechanism in an optical recording and/or reproducing apparatus.

Fixing a hub to an optical disc requires special aligning equipment and thus is an extra source of tolerance errors in the production process of said optical disc. An advantage of the omission of a hub is, therefore, that the manufacturing process of said optical discs is made simpler and more reliable.

According to the prior art, a hub introduces an additional thickness, which is at least equal to the table abutment needed to maintain the hub in place on the optical disc. With a magnetic substrate, no table abutment is required. Another advantage of having no hub is, therefore, that the thickness of said optical disc is reduced, which is of great interest for portable applications.

Such a magnetic substrate is preferably made of soft magnetic material for two main reasons: firstly, it is generally cheaper than a hard magnetic material; secondly, it does not attract other magnetic materials after removal of the optical disc from the optical recording and/or reproducing apparatus.

Using a metallic substrate may help to significantly reduce the overall disc thickness compared with an optical disc with a polycarbonate substrate. As a matter of fact, the manufacture of thin polycarbonate substrates may cause some problems related to injection molding technology and polycarbonate rigidity. By contrast, a metal substrate, even it has been designed extremely thin, does not cause particular difficulties in manufacture and remains rigid, which protects the optical disc against bending.

Therefore, in a preferred embodiment of the invention, said magnetic substrate is made of soft magnetic metal, for instance iron.

Another advantage of such a metal substrate is that it gives a higher inertia to the optical medium, which contributes to an avoidance of speed variations of the spindle motor. It should be noted that even a small speed variation is capable of inducing dramatic errors during writing.

Such a metal substrate is also less sensitive to humidity and temperature variations, which are responsible for tilt problems in polycarbonate substrates.

These and other aspects of the invention will be apparent from and will be elucidated with reference to the embodiments described hereinafter.

### Brief description of the drawings

The invention will be further described with reference to the accompanying drawings:

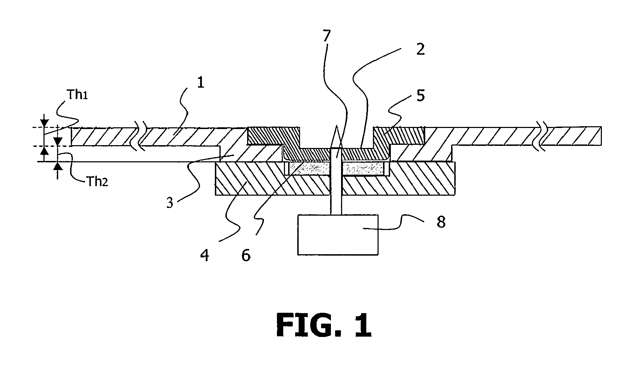

- Fig. 1 depicts an optical disc placed on a turntable of a recording and/or reproducing apparatus according to the background art,
- Fig. 2a to 2c depict optical discs according to the invention,
- Fig. 3 shows how an optical disc is placed and clamped onto the turntable of an optical recording and/or reproducing apparatus according to a first embodiment of the invention,
- Fig. 4 shows how an optical disc is placed and clamped onto the turntable of an optical recording and/or reproducing apparatus according to a second embodiment of the invention,
- Fig. 5 shows how an optical disc is placed and clamped onto the turntable of an optical recording and/or reproducing apparatus according to a third embodiment of the invention,
- Fig. 6 shows how an optical disc is placed and clamped onto the turntable of an optical recording and/or reproducing apparatus according to a fourth embodiment of the invention,
- Fig. 7 depicts a manufacturing process of the information layer of a pre-recorded optical disk according to the invention.

### Detailed description of the invention

An optical disc usually comprises a base layer called a substrate for supporting an information layer and a cover layer. Said information layer is intended to contain information to be stored in said optical disc, and said cover layer serves to protect said information layer, in particular from dust.

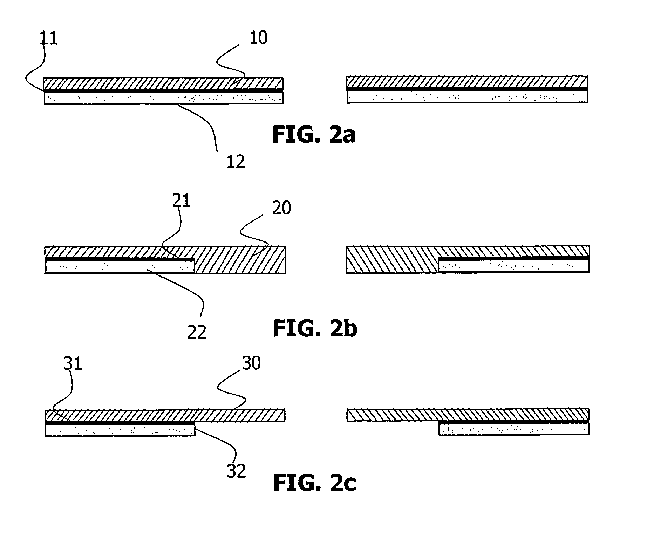

An optical disc according to the invention comprises a magnetic substrate. Three examples of such an optical disc are depicted in Figs. 2a, 2b and 2c:
- Fig. 2a shows a planar optical disc with a planar magnetic substrate 10. Said optical disc also comprises an information layer 11 and a cover layer 12,
- Fig. 2b shows a planar optical disc according to the invention, whose substrate 20 comprises a depression for receiving an information layer 21 and a cover layer 22,
- Fig. 2c shows a non-planar optical disc according to the invention, comprising a planar magnetic substrate 30, an information layer 31, and a cover layer 32, such that said substrate 30 extends beyond said information and cover layers.

An optical disc according to the invention may be a pre-recorded or read-only (ROM) optical disc, or a recordable or write-once (WO) optical disc, or a rewritable (RW) optical disc, or a combination of these types (for instance, read-only combined with recordable). It may also consist of multiple information layers such as, for instance, dual-layer discs.

It is to be noted that the information layer (11, 21, 31) has a thickness that is typically in the range of 5 to 100 nm for a pre-recorded optical disc and a thickness typically in the range of 50 to 250 nm for a recordable or a rewritable optical disc. The cover layer (12, 22, 32) is made, for example, of polycarbonate and has a typical thickness of 100 µm.

Said optical disc is, for instance, a Small Form Factor Optical (SFFO) disc, but this is not limitative. In this case, said optical disc has a diameter of about 30 mm.

Said substrate does not need to be a permanent magnet, i. e. a hard magnetic material. It may advantageously be made of soft magnetic material, which means a material that can be easily magnetized in the presence of a magnetic field, but whose magnetization is not permanent if the magnetic field is removed. Soft magnetic materials comprise metals and their alloys, but also polycarbonate with magnetic particles or soft magnetic ferrites, called ceramic-type materials such as plastic bonded ferrites.

In a preferred embodiment of the invention, said substrate is made of a soft magnetic metal such as, for example, iron. As a matter of fact, an advantage of a metal substrate is that it has a five times higher specific stiffness than a polymer substrate. The use of metal therefore renders possible a substantial reduction of the substrate thickness, which is of great interest for portable applications. It is thus possible to manufacture a metal substrate having a thickness of 100 µm, which is not the case, for example with polycarbonate substrates.

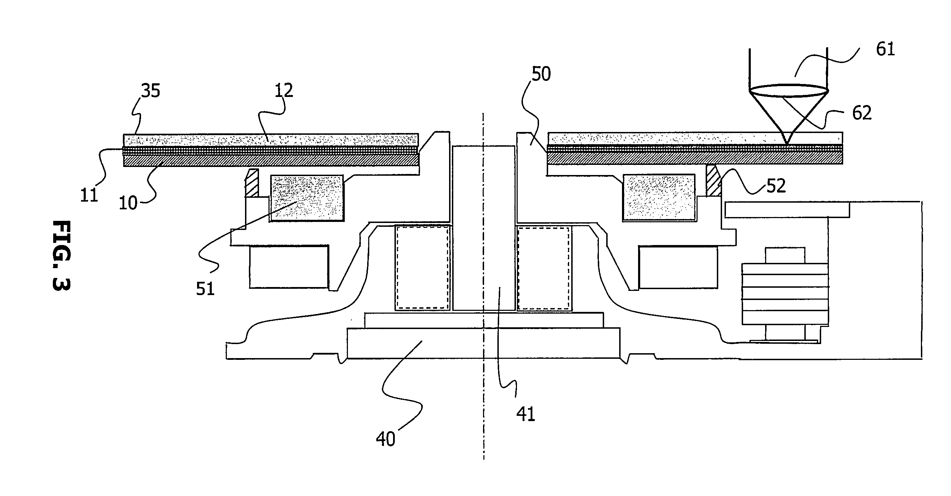

The magnetic properties of the substrate (10, 20, 30) are used for magnetically clamping the optical disc according to the invention onto a turntable of an optical recording and/or reproducing apparatus. Some ways in which the optical disc may be placed and fixed on the turntable are depicted in Figs. 3 to 6.

Said optical recording and/or reproducing apparatus comprises rotating means 40 for rotating a turntable 50 and optical means 60 for recording and/or reproducing the optical disc 35. Said turntable 50 is driven by said rotating means 40 through a spindle 41. Said optical means 60 comprise an objective lens 61 and a laser beam 62. Said turntable 50 comprises magnetic means 51, for example having an annular shape for attracting the magnetic substrate (10, 20, 30) of the optical disc onto said turntable 50, so as to maintain the optical disc in place during a rotation of the turntable.

Said turntable 50 further comprises heightening means 52 for preventing said optical disc from getting into contact with said magnetic means 51. Said heightening means 52 put the optical disc at a higher level so as to leave an air gap 53 of about 0.05 mm between said turntable 50 and said optical disc. In this way, no excessive attractive force is exerted on the optical disc, which can be easily removed from the turntable 50. In a preferred embodiment of the invention, said heightening means 52 are formed by an annular protuberance which serves to support the optical disc.

An optical disc is usually read through the substrate, which is in general made of a light-transparent material, so as to allow a laser beam to read said information through said substrate. An optical disc according to the invention, however, cannot be read through its magnetic substrate by the optical means 60 because a laser beam cannot pass through a magnetic material. Therefore, said optical disc must be read through the cover layer (12, 22, 32), and said cover layer has to be made of a material which is transparent to said laser beam, for instance a polycarbonate.

In a first embodiment of the invention shown in Fig. 3, a planar optical disc 35 with a planar magnetic substrate 10 as depicted in Fig. 2a is involved. Said optical disc accordingly has a substrate face and a cover layer face. The rotating means 40 of the optical recording and/or reproducing apparatus are applied to said substrate face, so as to let the substrate achieve its hub function, whereas the optical means 60 are applied to the cover layer face so as to make recording and/or reproducing of the optical disc possible. It is to be noted that the laser beam 62 is focused on the information layer 11 by means of the optical lens 61 and said cover layer. An advantage of this solution is the use of a thin planar optical disc 35, which is very easy to manufacture.

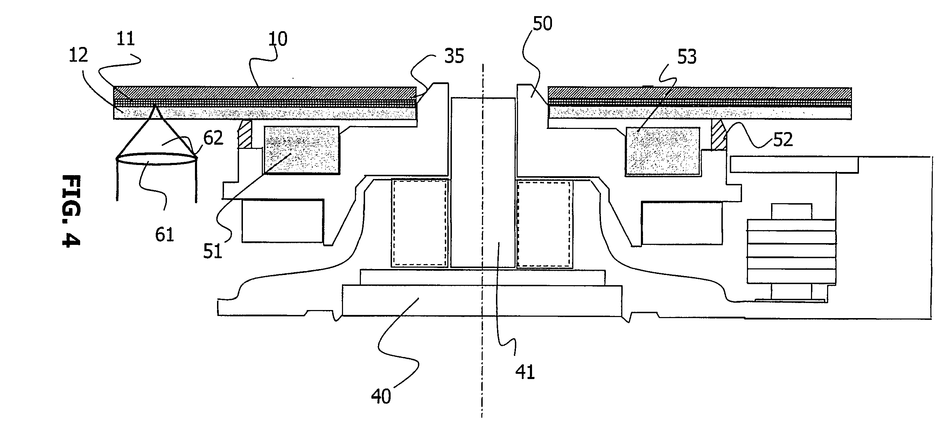

In a second embodiment of the invention shown in Fig. 4, the same optical disc 35, shown in Fig. 2a, is placed in a recording and/or reproducing apparatus, wherein said rotating means 40 and said optical means 60 are applied to a same side of said optical disc, i. e. to the transparent cover layer side. The turntable 50, which is driven by said rotating means 40, and the magnetic means 51 are thus applied to the cover layer side. In other words, the optical disc 35 has to be turned over compared with the previous embodiment. Consequently said magnetic means are no more in the closest vicinity of the magnetic substrate 10. However, the magnetic means 51 may have a magnetic field with an intensity sufficient for attracting the magnetic substrate 10 through the information layer 11 and the cover layer 12. A first advantage of this embodiment is, as in the previous embodiment, that the optical disc 35 involved comprises planar layers and is consequently very easy to manufacture. A second advantage is that the total thickness of the recording and/or reproducing apparatus is reduced.

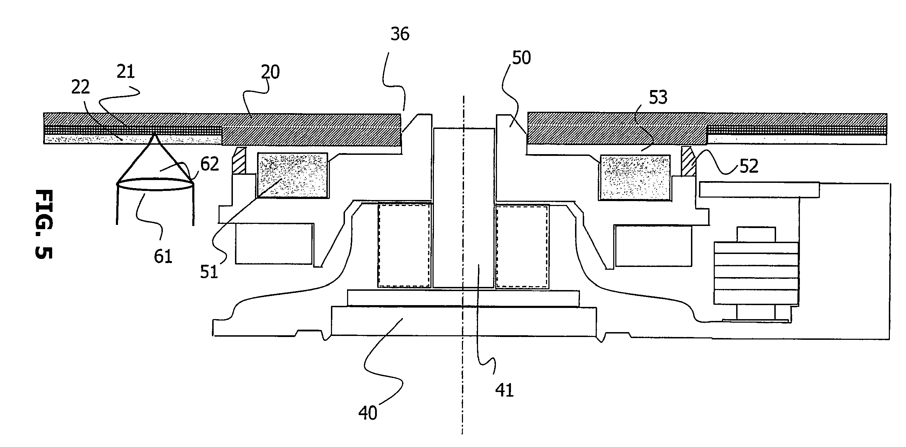

In a third embodiment of the invention depicted in Fig. 5, the optical disc 36, depicted in Fig. 2b is placed in a recording and/or reproducing apparatus, wherein said rotating means 40 and said optical means 60 are applied to a same side of said optical disc. Said optical disc 36 is still planar, but the magnetic substrate 20 of said optical disc 36 comprises a depression for receiving an information layer 21 and a cover layer 22, so as to uncover a portion of the magnetic substrate 20. Since said magnetic substrate 20 is visible on both sides of the optical disc 36, said magnetic substrate 20 is able to optimally achieve its hub function.

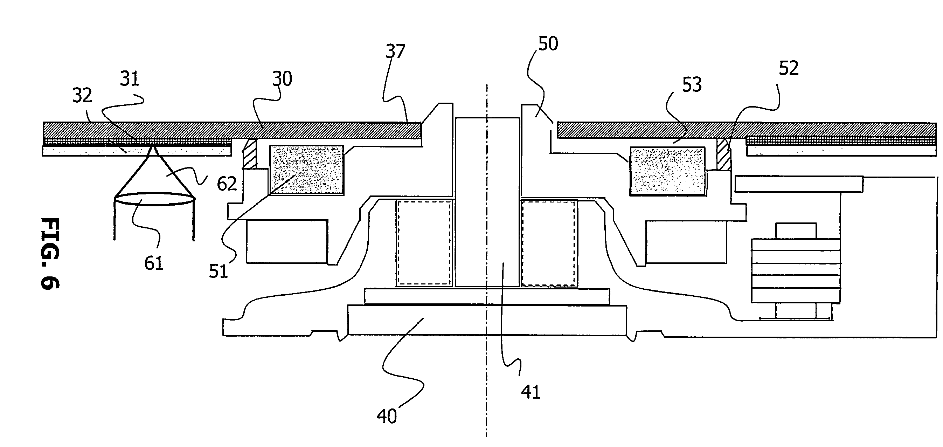

In a fourth embodiment of the invention depicted by Fig. 6, the optical disc 37 shown in Fig. 2c is placed in a recording and/or reproducing apparatus, wherein said rotating means 40 and said optical means 60 are applied to a same side of said optical disc. Said optical disc 37 comprises a planar magnetic substrate 30, which extends beyond the information layer 31 and the cover layer 32 so as to leave space for the magnetic means 51. Said optical disc 37 therefore comprises an area where the magnetic substrate 30 is present on both its sides and with a thickness reduced to the thickness of said magnetic substrate. Said substrate 30 is therefore able to optimally achieve its clamping function. Provided that the magnetic means 51 are designed to fit into the space left in the center hole of the optical disc, a reduction of the total thickness of the optical recording and/or reading apparatus may be obtained. Said reduction is equal to the sum of the thicknesses of the information and cover layers.

The way in which an optical disc according to the invention is manufactured is quite similar to a classical production process, well known to those skilled in the art. Therefore, it will not be described in detail.

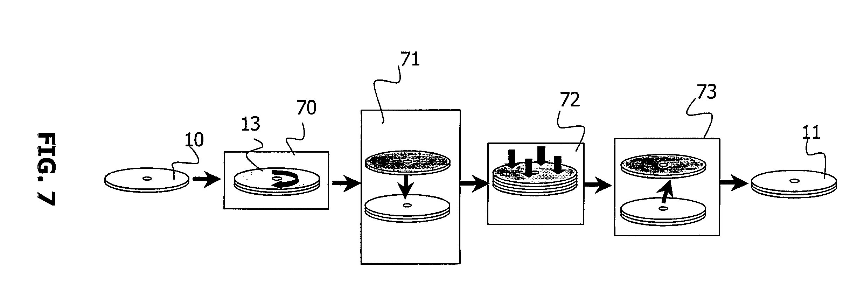

In the case of a pre-recorded optical disc with a metal substrate, a common glass/photopolymer (2P) method, for instance used for DVD-18 discs, is performed for producing the information layer and sticking it to the magnetic substrate. Said manufacturing technology, depicted in Fig. 7, comprises the steps of:
- spin-coating 70 a photopolymer UV-curing resin 13 onto said metal substrate 10. It is to be noted that said resin 13 holds well on a metalsurface,
- subsequently, pressing 71 a polymer stamper 14 with an appropriate (inverse) groove and/or pit structure into the wet photopolymer resin 13, for instance by using vacuum-bonding or pad-bonding,
- UV-curing 72 the photopolymer resin 13 through the polymer stamper 14, which is transparent to UV-light,
- releasing 73 the polymer stamper 14 from the metal substrate after curing.

The main difference with the classical method consists in the fact that UV-curing now takes place through the polymer stamper 14 instead of through the substrate 10 onto which the photopolymer (2P) is applied.

In this way, the desired relief and/or pit structure has been replicated in the photopolymer resin 13, which forms the information layer 11. In said manufacturing process, it is important to select suitable materials for the polymer stamper 14 and the photopolymer resin 13: after UV-curing, the photopolymer resin, for instance an acrylic resin, should have poor adhesion to the polymer stamper, for instance a polyolefin, so that it can be released easily. In this way, a good replication quality can be obtained and the polymer stamper can be re-used several times.

Once the groove structure has been replicated into the photopolymer layer, the read-only optical disc manufacturing process proceeds via the conventional route of making discs with a thin cover layer 12, like Blu-ray Discs.

In the case of a pre-recorded or read-only disc, a thin metal mirror is sputtered onto the replicated pit structure.

In the case of a rewritable (RW) optical disc, the information layer may consist of a thin film layer stack, comprising a recording material, one or more dielectric layers, and a mirror layer.

In the case of a recordable (WO) optical disc, the information layer may consist of a dye layer in combination with one or more dielectric layers and/or a metal mirror layer. It may also be made of a stack of thin inorganic films similar to that of a rewritable optical disc.

Modifications and improvements may be proposed for the described optical disc and apparatus without departing from the scope of the invention. The invention is thus not limited to the examples proposed. For instance, the cover layer may contain the information to be stored instead of the information layer in the optical disc according to the invention.

The drawings and their description hereinbefore illustrate rather than limit the invention. It will be evident that there are numerous alternatives, which fall within the scope of the appended claims.

Any reference sign in a claim should not be construed as limiting the claim. Use of the verb "to comprise" and its conjugations does not exclude the presence of elements or steps other than those stated in a claim. Use of the article "a" or "an" preceding an element or step does not exclude the presence of a plurality of such elements or steps.

## Claims

1. An optical disc (35, 36, 37), comprising a magnetic substrate (10, 20, 30).

2. An optical disc (35, 36, 37) as claimed in claim 1, wherein said substrate is made of soft magnetic material.

3. An optical disc (35, 36, 37) as claimed in claims 1 or 2, wherein said substrate is made of metal.

4. An optical disc (35, 36) as claimed in claim 1, wherein said optical disc is planar.

5. An optical disc (36) as claimed in claim 4, wherein said magnetic substrate has a depression for receiving a cover layer (22).

6. An optical disc (35, 37) as claimed in claim 1, wherein said magnetic substrate is planar.

7. An optical disc (37) as claimed in claim 6, wherein said substrate (30) extends beyond said cover layer (32), so as to leave space for a magnet.

8. An optical disc (35, 36, 37) as claimed in one of claims 1 to 7, wherein said disc is a Small Form Factor Optical (SFFO) disc.

## Patentansprüche

1. Optischer Datenträger (35, 36, 37), der ein magnetisches Substrat (10, 20, 30) umfasst.

2. Optischer Datenträger (35, 36, 37) nach Anspruch 1, wobei das magnetische Substrat aus magnetisch weichem Material hergestellt ist.

3. Optischer Datenträger (35, 36, 37) nach Anspruch 1 oder 2, wobei das Substrat aus Metall hergestellt ist.

4. Optischer Datenträger (35, 36) nach Anspruch 1, wobei der optische Datenträger eben ist.

5. Optischer Datenträger (36) nach Anspruch 4, wobei das magnetische Substrat eine Vertiefung zum Aufnehmen einer Deckschicht (22) aufweist.

6. Optischer Datenträger (35, 37) nach Anspruch 1, wobei das magnetische Substrat eben ist.

7. Optischer Datenträger (37) nach Anspruch 6, wobei sich das Substrat (30) über die Deckschicht (32) hinaus erstreckt, um so Platz für einen Magneten zu lassen.

8. Optischer Datenträger (35, 36, 37) nach einem der Ansprüche 1 bis 7, wobei der Datenträger eine Small Form Factor Optical Disc (SFFO-Disc) ist.

## Revendications

1. Disque optique (35, 36, 37), comprenant un substrat magnétique (10, 20, 30).

2. Disque optique (35, 36, 37) suivant la revendication 1, dans lequel ledit substrat est fait d'un matériau magnétique doux.

3. Disque optique (35, 36, 37) suivant la revendication 1 ou 2, dans lequel ledit substrat est fait d'un métal.

4. Disque optique (35, 36) suivant la revendication 1, dans lequel ledit disque optique est plan.

5. Disque optique (36) suivant la revendication 4, dans lequel ledit substrat magnétique comporte une dépression pour recevoir une couche de protection (22).

6. Disque optique (35, 37) suivant la revendication 1, dans lequel ledit substrat magnétique est plan.

7. Disque optique (37) suivant la revendication 6, dans lequel ledit substrat (30) s'étend au-delà de ladite couche de protection (32), de manière à laisser un espace pour un aimant.

8. Disque optique (35, 36, 37) suivant l'une quelconque des revendications 1 à 7, dans lequel ledit disque est un disque SFFO (Small Form Factor Optical/optique à petit facteur de forme).
